# EUROPEAN PATENT APPLICATION

(11) **EP 1 610 277 A2**
(43) Date of publication of application: **28.12.2005**
(21) Application number: 05253387.4
(22) Date of filing: 02.06.2005
(51) Int. Cl.: G07G 1/14

(54) **Facilitating remote interventions in a self-checkout system**

(30) Priority: 22.06.2004 US 873927
(71) Applicant: NRC International Inc., Dayton, Ohio 45479 (US)
(72) Inventor: Mason, Timothy Edward, Buford, Georgia 30519 (US)
(74) Representative: Williamson, Brian

(57) **Abstract**

A system and method of facilitating remote interventions in a self-checkout system which allows an attendant to wander among self-checkout stations. The system includes a communicator for communicating the interventions to an attendant and for communicating a response to the intervention from the attendant to the self-checkout system.

## Description

The present invention relates to self-checkout systems and more specifically to a system and method of facilitating remote interventions in a self-checkout system.

Current self-checkout solutions often include an attendant station and four self-checkout terminals arranged to accommodate two aisles of customer traffic. This station is equipped with a computer that allows the cashier to interface with the self-checkout terminals. From this station, the attendant monitors all four self-checkout terminals. This station is typically immobile.

Periodically, however, the attendant must walk away from the station to collect coupons, scan large items, view identification cards, or help confused customers.

For example, the attendant may see that a customer has scanned a tobacco product that requires age verification. The attendant station computer displays an indication to the attendant that attendant approval is required. The attendant walks to the customer to view the customer's identification card. Meanwhile, another customer at a different self-checkout terminal fails to bag a purchased item, triggering an approval request to the attendant station. The other customer must now wait for approval from the attendant. The attendant completes the visual verification of the one customer's identification card and walks back to the attendant station to enter the birth date from the identification card. The attendant then completes the approval for the other customer.

Self-checkout solutions are intended to save time. But any time the attendant walks away from the attendant station, additional time is added to one or more self-service transactions.

Therefore, it would be desirable to provide a system and method of facilitating remote interventions in a self-checkout system.

In accordance with the teachings of the present invention, a system and method of facilitating remote interventions in a self-checkout system is provided.

The system includes a communicator for communicating the interventions to an attendant and for communicating a response to the intervention from the attendant to the self-checkout system.

Embodiments of the present invention will now be described, by way of example, with reference to the accompanying drawings in which:
Fig. 1 is a block diagram of a self-checkout system; and
Fig. 2 is a flow diagram illustrating operation of an attendant computer.

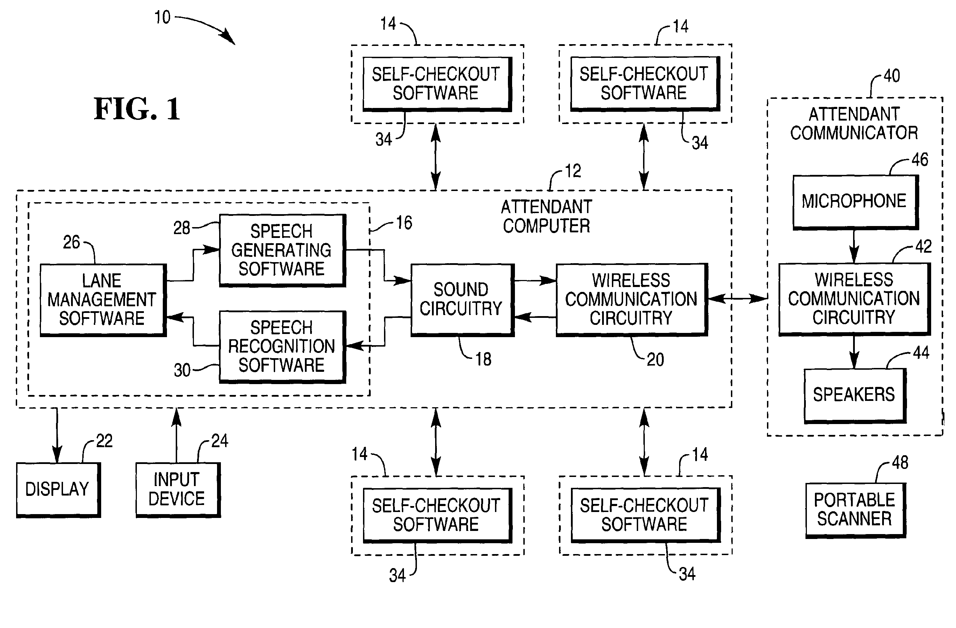

Referring now to Fig. 1, self-checkout system 10 includes attendant computer 12, self-checkout terminals 14, and attendant communicator 40.

Attendant computer 12 includes processor 16, sound circuitry 18, and wireless communication circuitry 20.

Processor 16 executes lane management software 26, speech generating software 28, and speech recognition software 30.

Lane management software 26 receives status information and automated intervention requests from self-checkout terminals 14. Lane management software 26 is configured to recognize and respond to messages from self-checkout terminals 14.

Speech generating software 28 works with sound circuitry 18 to convert the requests to sound signals.

Speech recognition software 30 works with sound circuitry 18 to convert speech signals to digital or software instructions directed to lane management software 26.

Wireless communication circuitry 20 wirelessly transmits the sound signals to attendant communicator 40. Wireless communication circuitry 20 wirelessly receives speech signals from attendant communicator 40.

The attendant wears attendant communicator 40 and may additionally carry portable scanner 48.

Attendant communicator 40 includes wireless communication circuitry 42, speakers 44, and microphone 46. Attendant communicator 40 may include a headset worn by the attendant.

Wireless communication circuitry 42 wirelessly receives sound signals from wireless communication circuitry 20 and sends the sound signals to speakers 44.

Wireless communication circuitry 42 further receives speech signals from microphone 46 and wirelessly transmits the speech signals to wireless communication circuitry 20.

Wireless communication circuitry 20 and 42 may include radio frequency (RF) communication circuitry. Wireless communication circuitry 42 additionally includes amplification circuitry and a battery for amplifying received sound signals and speech signals.

Speakers 44 convert the sound signals to audible messages.

Microphone 46 converts attendant speech to speech signals.

Portable scanner 48 preferable includes a wireless handheld scanner for scanning large items. Portable scanner 48 may decode bar code labels or send undecoded bar code information to self-checkout terminals 14 via wireless communication circuitry 20 and attendant computer 12.

Attendant computer 12 further includes display 22 and input device 24.

Display 22 displays status information and intervention requests provided by lane management software 26.

Input device 24 records attendant selections in response to intervention requests.

Attendant computer 12 and self-checkout computers 14 are preferably coupled together via a network.

Self-checkout terminals 14 execute self-checkout software 34, which process self-service transactions. Self-checkout software 34 generates intervention requests and sends the intervention requests to attendant computer 12.

In operation, an attendant wears communicator 40 so as to communicate remotely with attendant computer 12. If the attendant is called to one of self-checkout terminals 14 by a customer or by self-checkout software 34 to verify an identification card, scan a large item, or provide other assistance, the attendant receives status information and intervention requests through speakers 42. The attendant may speak a response into microphone 44 rather than walk back to attendant computer 12.

Table I below illustrates typical tasks of a self-checkout attendant, information supplied to the attendant, and actions taken by the attendant.

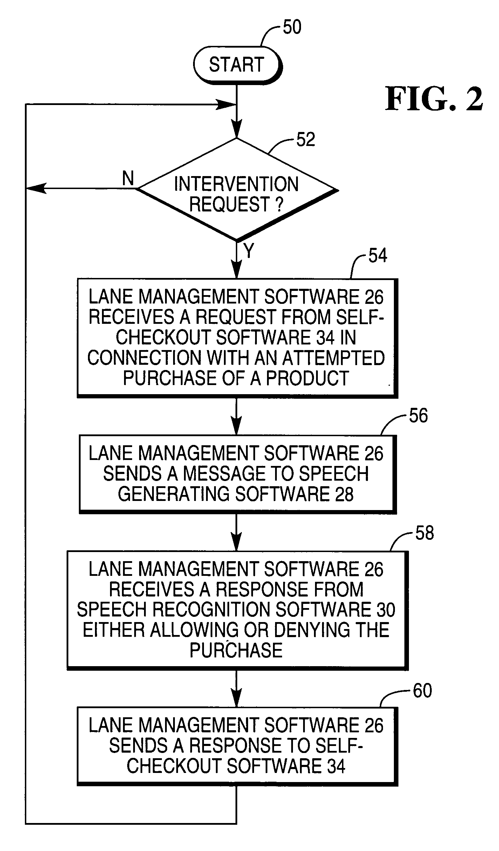

Turning now to Fig. 2, example operation of attendant computer 12 is illustrated in detail beginning with START 50.

In step 52, lane management software 26 waits for an intervention request from self-checkout software 34.

In step 54, lane management software 26 receives a request from self-checkout software 34 in connection with an attempted purchase of a product.

For example, suppose self-checkout software 34 at one of self-checkout terminals 14 determines that a scanned item is an alcohol product that can only be sold to persons aged 21 or older. Self-checkout software 34 sends attendant computer 12 an intervention request.

The attendant may be located at attendant computer 12 or may be walking among self-checkout terminals 14, viewing what is happening or assisting customers with questions posed directly to the attendant.

In step 56, lane management software 26 sends a message to the attendant. Lane management software 26 wirelessly sends the message to attendant communicator 40 and displays the message on display 22.

Speech generating software 28 works with sound circuitry 18 to convert the requests to audio messages. Preferably, audio messages and spoken responses from the attendant are standardized to make communication easier.

Wireless communication circuitry 20 wirelessly transmits the sound signals to attendant communicator 40.

The attendant receives the message through attendant communicator 40 and walks over to self-checkout terminal 14 and determines the age of the customer by checking his driver's license. The attendant speaks into microphone 46, "Lane one age 25".

In step 58, lane management software 26 receives a response from the attendant either allowing or denying the purchase.

Wireless communication circuitry 20 wirelessly receives speech signals from attendant communicator 40.

Speech recognition software 30 works with sound circuitry 18 to convert speech signals to software responses directed to lane management software 26.

In step 60, lane management software 26 sends a response to self-checkout software 34, in the same way as if the attendant were responding through input device 24.

Operation returns to step 52 to wait for another intervention request from any of self-checkout terminals 14.

**Table I**

| Task | Audio messages | Attendant speech |
|---|---|---|
| Customer purchases an age restricted item on lane one | "Age validation required, lane one" plays through speakers 42 | Attendant walks to lane one, looks at the customer's identification and speaks into microphone 44 "Lane one age 25" |
| Customer on lane three places an unpurchased item in a bag | "Unpurchased item in bag, lane three" | Attendant walks to lane three and determines if an unpurchased item is in the bag. The attendant can then remove the item. |
| Customer on Lane three places a purse on a bag scale, triggering an unpurchased item violation | "Unpurchased item in bag. lane three" | Attendant walks to lane three and asks the customer to remove the purse. Attendant may then approve the transaction by speaking, "Lane three approve." |
| Customer bags an item after scanning it on lane two, but lane management software 26 detects an incorrect weight on a bag scale | "Wrong item bagged, lane two" | Attendant walks to lane two, and speaks, "Lane two approve", if correct item is bagged. |
| Customer at lane one appears unable to lift and scan a large item. | None. | Attendant walks to lane one, and speaks, "Scan Lane one" to instruct the system that the next item scanned with the attendant's handheld wireless scanner should be part of lane one's transaction. The attendant then scans the item for the customer on lane one. |

Advantageously, the attendant is able to walk among self-checkout terminals 14 while still being able to handle requests. The invention reduces transactions times and allows the attendant to process more customers. Finally, the invention may reduce shrinkage.

A headset communicator allows the attendant to operate in a "hands-free" mode, which makes tasks such as helping with a scan or validating an identification card easier.

Although the invention has been described with particular reference to certain preferred embodiments thereof, variations and modifications of the present invention can be effected within the scope of the following claims.

## Claims

1. A system for facilitating an intervention in a self-checkout system comprising:
a communicator with an attendant for wirelessly communicating an intervention request to the attendant and for wirelessly communicating an attendant response to the self-checkout system.

2. A system a claimed in claim 1, further comprising:
an attendant computer for converting the intervention request to an audio message, for transmitting the audio message to the communicator, for receiving the attendant response from the communicator, for converting the attendant response to a digital instruction, and for forwarding the digital instruction to the self-checkout system.

3. A system a claimed in claim 2, wherein the attendant computer comprises:
sound circuitry;
wireless communication circuitry; and
a processor for causing the sound circuitry to convert the intervention request to an audio message, for causing the wireless communication circuitry to transmit the audio message to the communicator and receive the attendant response from the communicator, for using the sound circuitry to convert the attendant response to the digital instruction, and for forwarding the digital instruction to the self-checkout system.

4. A system a claimed in claim 3, wherein the attendant computer further comprises:
a display for displaying the intervention request.

5. A system a claimed in claim 3, wherein the processor executes speech generating software for causing the sound circuitry to convert the intervention request to an audio message.

6. A system a claimed in claim 3, wherein the processor executes speech recognition software for causing the sound circuitry to convert the attendant response to a digital instruction.

7. A system a claimed in any preceding claim, further comprising:
a portable scanner for use by the attendant in scanning items at the self-checkout system.

8. A system a claimed in any preceding claim, wherein the communicator comprises a headset worn by the attendant.

9. A method of processing a remote intervention request comprising the steps of:
receiving an intervention request in connection with an attempted purchase of a product from a self-checkout terminal;
wirelessly sending a message to a communicator with an attendant to alert the attendant to the intervention request;
wirelessly receiving a response from the attendant; and
sending the response to the self-checkout terminal.
